# EUROPÄISCHE PATENTSCHRIFT

(11) **EP 2 861 845 B1**
(45) Veröffentlichungstag und Bekanntmachung des Hinweises auf die Patenterteilung: **17.02.2021**
(21) Anmeldenummer: 13737158.9
(22) Anmeldetag: 14.06.2013
(51) Int. Cl.: F01N 13/14, F01N 13/18, B21D 26/033, B21D 17/02, B21D 15/06, B29C 57/04, F16L 11/20, F16L 11/15, F16L 11/115, B21D 39/04, F16L 7/00

(54) **ROHRBAUTEIL UND VERFAHREN ZUR HERSTELLUNG des ROHRBAUTEILS**
A tubular COMPONENT AND METHOD FOR PRODUCING the TUBULAR COMPONENT
PIÈCE DE TUYAU ET PROCÉDÉ DE FABRICATION De la PIÈCE DE TUYAU

(30) Priorität: 14.06.2012 DE 102012210045
(43) Veröffentlichungstag der Anmeldung: 22.04.2015
(73) Patentinhaber: Senior IP GmbH, 8200 Schaffhausen (CH)
(72) Erfinder: ZEISBERG, Patrick, 34314 Espenau (DE); HILLEBRAND, Stephan, 37218 Witzenhausen (DE)
(74) Vertreter: Maikowski & Ninnemann Patentanwälte Partnerschaft mbB
(86) Internationale Anmeldenummer: PCT/EP2013/062375
(87) Internationale Veröffentlichungsnummer: WO 2013/186360

(56) Entgegenhaltungen:
- EP-A1- 0 590 188
- EP-A1- 1 291 501
- EP-A2- 0 957 244
- WO-A1-2011/092440
- DE-A1- 19 632 756
- FR-A- 1 505 086
- US-A- 3 995 438

## Beschreibung

Die Erfindung betrifft ein Rohrbauteil mit den Merkmalen des Anspruchs 1 und ein Verfahren zur Herstellung eines Rohrbauteils mit den Merkmalen des Anspruchs 12.

In vielen Bereichen der Technik, wie z.B. dem Automobilbau, ist es häufig erforderlich, zwei oder mehr ineinander liegende Rohre, zwischen denen sich ein Luftspalt bildet, miteinander zu verbinden. Die Rohre sollen zusammen noch eine gewisse Flexibilität aufweisen, aber sie sollen auch gegeneinander drehfest verbunden werden.

Es ist bekannt, die beiden Rohre durch Schweißpunkte oder -nähte miteinander zu verbinden. Dies erfordert regelmäßig eine besondere Konstruktion der Rohre im Umfeld der Schweißnaht.

Die EP 0 957 244 A2 beschreibt ein flexibles Leitungselement mit einem mit zylindrischen Anschlussenden versehenden, schraubengangförmigen oder ringgewellten Metallbalg und einem koaxial innerhalb des Balges angeordneten Metallschlauch, der mit seinen innerhalb der Balganschlussenden gelegenen Endstücken an den Balganschlussenden festgelegt ist. Hierbei sind Balg und Metallschlauch in wenigstens einem weiteren, zwischen den beiden Anschlussenden liegenden Bereich in gegenseitige zumindest partielle und zumindest mittelbare Anlage gebracht.

Es ist die Aufgabe der vorliegenden Erfindung, ein Rohrbauteil und ein Verfahren zur Herstellung eines Rohrbauteils zur Verfügung zu stellen, dessen Innen- und Außenrohr in einfacher Weise miteinander verbindbar ist.

Diese Aufgabe wird durch ein Rohrbauteil mit den Merkmalen des Anspruchs 1 gelöst.

Ein Außenrohrelement und mindestens ein innerhalb des Außenrohrelements angeordnetes Innenrohrelement sind über eine Ausformung miteinander verbunden. Das Außenrohrelement ist als flexibles Rohrelement mit mehreren Ausformungen, insbesondere Wellen und / oder mindestens einem Wellabschnitt ausgebildet.

Das Außenrohrelement und das mindestens eine Innenrohrelement weisen an mindestens einer Stelle jeweils eine in radialer Richtung nach außen zeigende Ausformung auf, wobei die Außenseite der Ausformung des mindestens einen Innenrohrelements mindestens teilweise flächig an der Innenseite der Ausformung des Außenrohrelementes oder an der Innenseite eines anderen Innenrohrelementes (bei mehr als einem Innenrohrelement) anliegt, so dass mittels der Ausformungen eine Verbindung zwischen dem mindestens einen Innenrohrelement und dem mindestens einen Außenrohrelement besteht, wobei die mindestens eine Verbindung als formschlüssige und / oder kraftschlüssige Verbindung, insbesondere als eine drehfeste Verbindung, ausgebildet ist.

Das mindestens eine Innenrohrelement muss nicht einstückig ausgebildet sein. Mit Vorteil weist es mindestens zwei Rohrstücke und mindestens ein Verbindungselement zur Verbindung der Rohrstücke auf. Die radial nach außen zeigende Ausformung kann auch am Verbindungselement angeordnet sein. Das Innenrohrelement kann ein komplexeres Bauteil sein, das aus mehreren Teilen zusammengesetzt ist oder im Rahmen der Herstellung des Rohrbauteils zusammengesetzt wird.

Das mindestens eine Innenrohrelement kann aber auch ein Rohrstück, insbesondere ein - abgesehen von der Ausformung - im Wesentlichen glattes Rohrstück (z.B. es ist kein Wellschlauch) aufweisen. Da ein Rohrbauteil auch mehrere Innenrohrelemente aufweisen kann, ist auch eine Kombination von zusammengesetzten Rohrstücken und einteiligen Rohren möglich. Durch ein im Wesentlichen glattes Innenrohr wird der Strömungswiderstand gesenkt.

Vorteilhafterweise ist das mindestens eine Innenrohrelement als flexibles Rohrelement ausgebildet.

In einer Ausführungsform sind die Ausformungen um das Außenrohrelement und um das mindestens eine Innerohrbauteil mindestens teilweise umlaufend ausgebildet.

Damit ist insbesondere in axialer Richtung eine formschlüssige Verbindung sichergestellt. Alternativ kann eine Ausführungsform eine formschlüssige radiale Verbindung durch im Wesentlichen punktuelle Vorsprünge aufweisen. Solche punktuellen Verformungen können z.B. durch spitze Stanzwerkzeuge hergestellt werden.

Ferner ist es vorteilhaft, wenn die Wandstärke des Außenrohrelements geringer ist, als die Wandstärke des mindestens einen Innenrohrelements.

Bei einer vorteilhaften Ausführungsform des Rohrbauteils weist das Außenrohrelement und / oder das mindestens eine Innenrohrelement mindestens teilweise einen flexiblen Wellabschnitt auf. Rohrbauteile mit der drehfesten Verbindung durch Ausformungen eignen sich insbesondere für Rohrbauteile, die mechanischen Belastungen ausgesetzt sind, wie sie z.B. bei einem Abgasbauteil oder in Abgasschläuchen in Kraftfahrzeugen vorkommen.

Dabei ist es besonders vorteilhaft, wenn das Außenrohrelement mindestens zwei Wellabschnitte aufweist, und die Verbindung zwischen dem Außenrohrelement und dem mindestens einen Innenrohrelement, insbesondere mittig, zwischen den beiden Wellabschnitten angeordnet ist.

Für die Verbindung mit anderen Bauteilen ist es vorteilhaft, wenn an mindestens einem der Enden des mindestens einen Innenrohrelements ein Flanschelement angeordnet ist. Auch ist es vorteilhaft, wenn das Außenrohrelement und das mindestens eine Innenrohrbauteil an den axialen Enden des Abgasleitungsbauteils miteinander verbunden sind, insbesondere verschweißt sind.

In einer weiteren Ausführungsform ist zwischen dem mindestens einem Innenrohrelement und dem mindestens einen Außenrohrelement ein hülsenförmiger Abstandhalter angeordnet. Dieser Abstandhalter vermeidet den Kontakt, und damit auch ggf. Verschleiß, der zwischen äußerem und innerem Rohrelement vorliegen kann.

Vorteilhafterweise hält das mindestens eine Verbindungselement einen Abstand zwischen dem mindestens einen Innenrohrelement und dem Außenrohrelement. In dieser Bauform dient das Verbindungselement gleichzeitig als Abstandhalter zwischen Innen- und Außenrohrelement.

Die Aufgabe wird auch durch ein Verfahren mit den Merkmalen des Anspruchs 12 gelöst.

In einem ersten Schritt wird mindestens ein Innenrohrelement in einem Außenrohrelement mit mehreren Ausformungen, insbesondere Wellen und / oder mindestens einem Wellabschnitt angeordnet.

Anschließend wird ein Verformungswerkzeug in das mindestens eine Innenrohrelement eingeführt.

Vom Verformungswerkzeug ausgehend erfolgt radial nach außen gerichtet eine plastische Verformung des mindestens einen Innenrohrelements und des Außenrohrelements, wobei die Verformung so ausgeführt wird, dass die Außenseite einer Ausformung des mindestens einen Innenrohrelements mindestens teilweise flächig an der Innenseite der Ausformung des Außenrohrelementes oder an der Innenseite der Ausformung eines anderen Innenrohrelementes (für den Fall, dass mehr als ein Innenrohrelement verwendet wird) anliegt, so dass mittels der Ausformungen eine Verbindung zwischen dem mindestens einen Innenrohrelement und dem Außenrohrelement hergestellt wird, wobei die mindestens eine Verbindung als formschlüssige und / oder kraftschlüssige Verbindung ausgebildet wird.

Dabei weist eine vorteilhafte Ausführungsform des Verfahrens ein Verformungswerkzeug auf, das radial nach außen bewegbare Elemente mit einer im Wesentlichen bogenförmigen Außenkontur aufweist. Es ist auch möglich, dass das Verformungswerkzeug radial nach außen bewegliche Elemente mit einer im Wesentlichen spitz nach außen zeigenden Kontur aufweist. Damit ist es möglich, im Wesentlichen punktförmige plastische Verformungen in dem Außenrohrelement und dem Innenrohrelement auszuführen.

Vorteilhafte Ausführungsformen des Verfahrens weisen als Verformungswerkzeug ein Spreizwerkzeug, ein Hydroformwerkzeug, eine Vorrichtung zum Verformen mit Elastomeren, eine Vorrichtung zum elektromagnetischen Umformen und / oder eine Vorrichtung zum Rollformen auf.

Bei einer weiteren Ausführungsform wird bei der Ausbildung der Ausformung an der Außenseite des Außenrohrelementes eine Matrize als Negativform für die Ausformung entgegenhalten.

Auch kann es vorteilhaft sein, wenn vom Verformungswerkzeug radial nach außen gerichtet eine plastische Verformung des mindestens einen Innenrohrelements so erfolgt, dass ein glattes Rohr oder ein Verbindungselement verformt wird. In beiden Fällen erfolgt die Verformung der Ausformung des Innenrohrelementes in-situ.

Zusätzlich oder alternativ kann das Verbindungselement auch bereits mit einer Ausbuchtung vorgeformt sein, wobei dann die Außenseite der Ausformung des mindestens einen Innenrohrelements mindestens teilweise flächig an der Innenseite der Ausformung des Außenrohrelementes oder an der Innenseite der Ausformung eines anderen Innenrohrelementes anliegt, so dass mittels der Ausformungen eine Verbindung zwischen dem mindestens einen Innenrohrelement und dem Außenrohrelement hergestellt wird.

Es ist auch möglich, dass das Verformungswerkzeug radial nach außen gerichtet eine plastische Verformung des mindestens einen Innenrohrelements so vornimmt, dass ein glattes Rohr oder ein Verbindungselement verformt wird.

Ausführungsformen der Erfindung werden beispielhaft in den folgenden Figuren dargestellt. Dabei zeigt
- Fig. 1: eine prinzipielle Schnittansicht eines Rohrbauteils mit zwei miteinander drehfest verbundenen Rohrbauelementen;
- Fig. 2: eine Draufsicht auf eine Variante der Ausführungsform gemäß Fig. 1;
- Fig. 3: eine Ausführungsform des Rohrbauteils als Abgasschlauch;
- Fig. 4: eine prinzipielle Darstellung eines Verfahrens zur Herstellung eines Rohrbauteils;
- Fig. 5: eine schematische Darstellung von einem Außenrohrelement mit zwei Innenrohrelementen;
- Fig. 6: eine Schnittdarstellung einer Ausführungsform eines Verformungswerkzeuges mit Matrize.

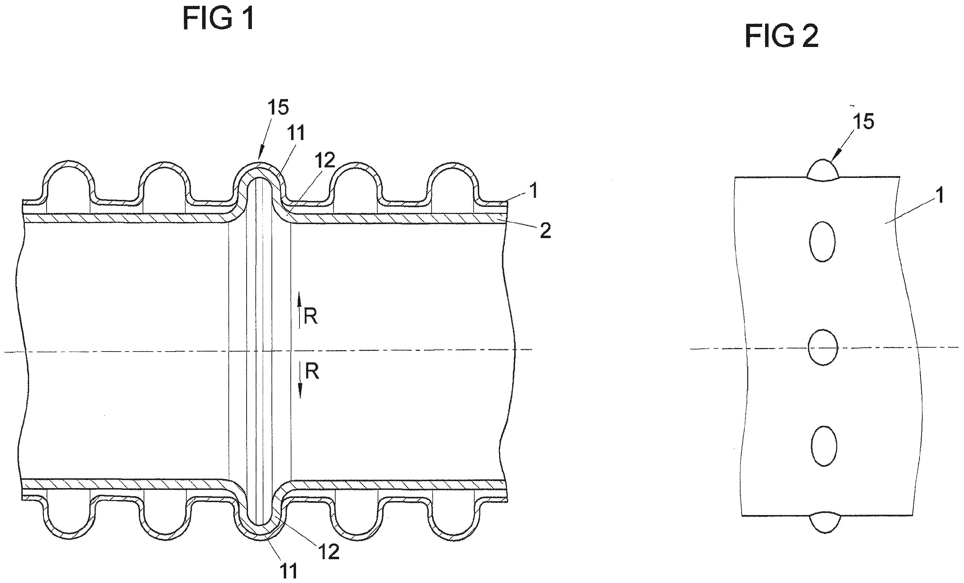

In Figur 1 ist der prinzipielle Aufbau der Verbindung 15 eines Rohrbauteils dargestellt. Das Rohrbauteil weist ein flexibles Außenrohrelement 1 und ein Innenrohrelement 2 auf. Das Innenrohrelement 1 weist hier ein Rohrstück auf, das an einer Stelle verformt wird.

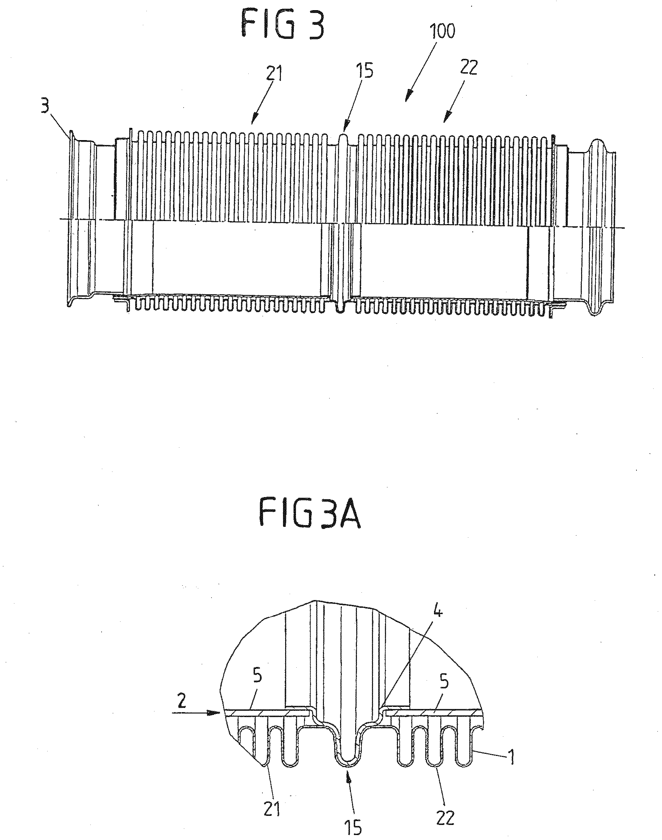

Das Außenrohrelement 1 weist zwei Wellabschnitte 21, 22 (siehe Fig. 3) links und rechts neben der Verbindung 15 auf, die durch eine Ausformung flächig miteinander verbunden sind.

In diesem Fall wird ein Innenrohrelement 2 in einem Außenrohrelement 1 angeordnet. Es ist aber durchaus möglich, mehrere Innenrohrelemente 2 in mehreren Außenrohrelementen 1 anzuordnen, die radial alle voneinander beabstandet sind, so dass zwischen den Rohren jeweils Luftspalte vorliegen.

In der hier dargestellten Ausführungsform ist das Außenrohrelement 1 etwas dünnwandiger ausgebildet als das Innenrohrelement 2. Bei dem Innenrohrelement 2 führt die dickere Wandung dazu, dass nach einer Verformung - die im Folgenden noch beschrieben wird - die elastische Rückfederung geringer ist, als bei einem dünnwandigeren Material. Damit liegt das dünnere, äußere Material immer sicher am dickeren, inneren Material an.

Als Materialien für das Außenrohrelement 1 und / oder das Innenrohrelement 2 können z.B. austenitische Edelstähle verwendet werden, die über eine ausreichende Verformbarkeit verfügen. Es können aber auch andere metallische Werkstoffe, wie Nickelbasis-Werkstoffe verwendet werden, die nicht unter die Kategorie der Edelstähle fallen.

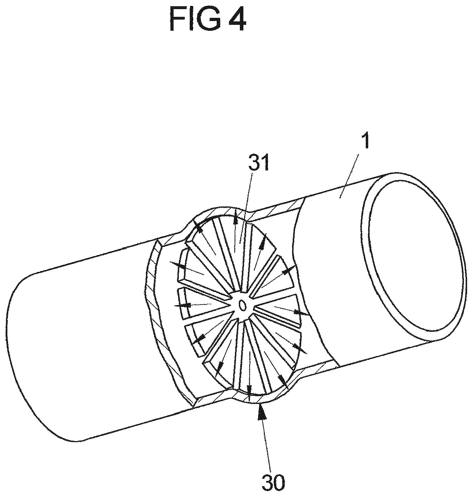

Das Innenrohrelement 2 und das Außenrohrelement 1 sind in der hier dargestellten Ausführungsform durch eine Verbindung zweier Ausformungen 11, 12 miteinander formschlüssig und kraftschlüssig verbunden. Die Herstellung der Ausformungen 11, 12 wird im Zusammenhang mit der Figur 4 noch näher erläutert.

Die Ausformung 12 stellt eine umlaufende Ausbuchtung dar, die radial (Pfeilrichtung R in Figur 1) nach außen zeigt. Die radial nach außen gerichtete Ausformung 12 wird außen von einer gleichermaßen geformten Ausformung 11 des Außenrohrelements 1 umgeben. Dabei ist die Ausformung 12 des Innenrohrelements 2 so in das Außenrohrelement 1 gedrückt, dass sich die beiden Rohrelemente 1, 2 eng miteinander verbinden. In axialer Richtung herrscht ein Formschluss vor, in radialer Richtung R ein Kraftschluss. Die parallelen Außenseiten der Ausformung 12 des Innenrohrelementes 2 liegen flächig an den Innenseiten der Ausformung 11 des Außenrohrelementes 1 an. Es liegt somit ein Eingriff der Innenrohrelemente 2 in das Außenrohrelement 1 vor, nicht nur ein bereichsweises Anliegen.

Durch diese Art der Verbindung 15 sind die beiden Rohrelemente 1, 2 gegeneinander drehfest gesichert. Axial neben der Verbindung 15 können zum Beispiel weitere Wellabschnitte 21, 22 (siehe Figur 3) angeordnet sein. Die Herstellung der Verbindung 15 durch einen Verformungsvorgang lässt sich schnell und effizient durchführen, so dass insbesondere eine Schweißnaht nicht erforderlich ist.

In Figur 2 wird eine Variante der in Figur 1 dargestellten Ausführungsform dargestellt, wobei eine Draufsicht auf das Rohrbauelement dargestellt ist. Anstelle einer radial umlaufenden Ausformung 11, 12, die in der ersten Ausführungsform (Fig. 1) durch die Ausformungen hervorgerufen wird, ist in der hier dargestellten Ausführungsform lediglich an einigen punktuellen Stellen am Umfang der Rohrelemente 1, 2 (in Fig. 2 ist nur das Außenrohrelement 1 sichtbar) eine Ausformung in radialer Richtung eingebracht worden. Auch diese punktuelle Verformung führt zu einer drehfesten Verbindung 15 der beiden Rohrelemente 1, 2. Auch hier wird im Bereich der punktuellen Verformung eine flächige Verbindung von Innenrohrelement 2 und Außenrohrelement 1 hergestellt. Das Innenrohrelement 2 liegt nicht nur an dem Außenrohrelement 1 an, sondern es greift in dieses ein.

In Figur 3 ist ein Ausführungsbeispiel dargestellt, bei dem ein Rohrbauteil 100 mit einer Verbindung 15 zwischen zwei Wellabschnitten 21, 22 dargestellt ist. Erkennbar ist, dass die Verbindung 15 sich ohne weiteres in die Wellung der Wellabschnitte 21, 22 einfügt.

Ein solches flexibles Rohrbauteil 100 kann z.B. in einem Kraftfahrzeug zur Entkopplung einer Abgasanlage vom Motor oder auch der Entkopplung zwischen Elementen der Abgasanlage dienen.

Das Innenrohrelement 2 weist zwei im Wesentlichen glatte Rohrstücke 5 (z.B. einen Wickelfalzschlauch, ggf. mit einem Geflecht) auf, die mit einem Verbindungselement 4 verbunden sind. Die glatte Ausführung hat eine bessere Strömungsführung zur Folge. Auch wird eine verbesserte Isolierung durch den Luftspalt zwischen Innenrohrelement 2 und Außenrohrelement 1 bewirkt.

In der dargestellten (siehe Fig. 3A) Ausführungsform dient das Verbindungselement 4 gleichzeitig als Abstandhalter zwischen Innen- und Außenrohrelement 1, 2 und als Verbindungselement der beiden Rohrstücke 5 des Innenrohrelements 2. Es ist möglich (wie unten noch erläutert wird), das Verbindungselement 4 als Hülse mit den Rohrstücken 5 des Innenrohrelementes 2 zu verbinden und dann zu verformen, oder eine Hülse wird vorab als Verbindungselement 4 (und ggf. Abstandhalter) vorgeformt und dann mit den Rohrstücken 5 des Innenrohrelementes 2 verbunden.

Die Außenrohrelemente 1 weisen jeweils einen ersten Wellabschnitt 21 und einen zweiten Wellabschnitt 22 auf. Da die äußeren Wellabschnitte 21 eine relativ niedrige Eigenfrequenz aufweisen und durch Motor und Fahrbahnanregungen in Eigenresonanz schwingen können, ist eine Dämpfung des Systems sinnvoll. Diese wird durch einen reibenden Wickelfalzschlauch erreicht, der über die Ausformung mit den äußeren Wellabschnitten 21, 22 verbunden ist.

In Fig. 3A ist der Bereich der Verbindung 15 aus der Fig. 3 vergrößert dargestellt. Hierbei ist deutlich zu erkennen, dass das Innenrohrelement 2 (mit seinen beiden Rohrstücken 5 und dem Verbindungsmittel 3) außerhalb des verformten Bereiches der Verbindung 15 innen glatt ausgebildet ist.

In Figur 4 ist in schematischer Weise ein Stanzwerkzeug 30 als Verformungswerkzeug dargestellt, das zur gleichzeitigen Ausbildung der Ausformungen 11, 12 in den Rohrelementen 1, 2 dient. Das Stanzwerkzeug 30 weist im Wesentlichen die Form einer Scheibe auf, die in einzelne Stanzsegmente 31 untergliedert ist. Durch einen geeigneten Mechanismus (zum Beispiel eine Hydraulik) können die einzelnen Stanzsegmente 31 radial nach außen bewegt werden. Durch die runde Außenkontur der Stanzelemente 31 wird die Innenseite des Innenrohrelements 2 in radialer Richtung verformt, so dass das darum herumliegende Außenrohrelement 1 ebenfalls mit verformt wird. Das Stanzwerkzeug 30 presst somit die beiden Außenrohrelemente 1, 2 zusammen und stellt damit durch die umlaufende Ausformung 11, 12 (wie in Figur 1 dargestellt) eine Verbindung 15 her.

Hier wird eine in-situ Verbindung hergestellt, die keine besondere Gestaltung (z.B. einen glatten Bereich zur Anbringung einer Schweißnaht) erfordert.

Wenn der Außenrand des Stanzwerkzeugs 30 anders geformt ist, zum Beispiel einen Dornaufsatz aufweist, kann eine punktuelle Verformung im Bereich der Verbindung 15 erzeugt werden, so dass eine Verbindung 15, wie in Figur 2 dargestellt, erreicht werden kann.

Die Verbindung 15 kann auch mittels anderer Verformungswerkzeuge 30 erreicht werden, wie z.B. Hydroforming-Vorrichtungen, Vorrichtungen zum Verformen von Elastomeren, eine Vorrichtung zum elektromagnetischen Umformen und / oder eine Vorrichtung zum Rollformen. Diese Verfahren oder Vorrichtungen können auch in Kombination miteinander verwendet werden.

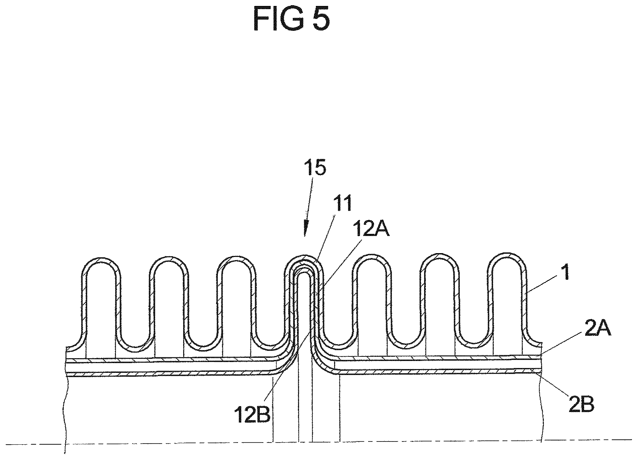

In Fig. 5 ist in schematischer Weise eine Schnittansicht durch ein Rohrbauteil mit einem Außenrohrelement 1 und zwei Innenrohrelementen 2A, 2B dargestellt. Die beiden Innenrohrbauelemente 2A, 2B sind jeweils - abgesehen vom Bereich der Ausformung 11, 12A, 12B im Bereich der Verbindung 15 - glatt ausgebildet. Die radial umlaufenden Ausformungen 11, 12A, 12B sind dabei so angeordnet, dass die Seitenwände eines inneren Rohrelements 2A, 2B im Bereich der Ausformung jeweils flächig mit der Ausformung des dem radial außen angeordneten Rohrelements anliegen.

Hier sind die Innenrohrelemente 2A, 2B einstückig ausgebildet, d.h. es liegt kein Verbindungsmittel 4 vor.

Die Außenseiten der Seitenwände der Ausformung 12B des ersten Innenrohrelementes 2B liegen parallel, flächig an den Innenseiten der Ausformung 12A des zweiten Innenrohrelementes 2A an. Die Außenseiten der Ausformung 12A des zweiten Innenrohrelementes 2A liegen wiederum an der Innenseite der Ausformung 11 des Außenrohrelementes 1 an. Im Wesentlichen liegen hier mehrere Wellen in radialer Richtung ineinandergeschoben vor.

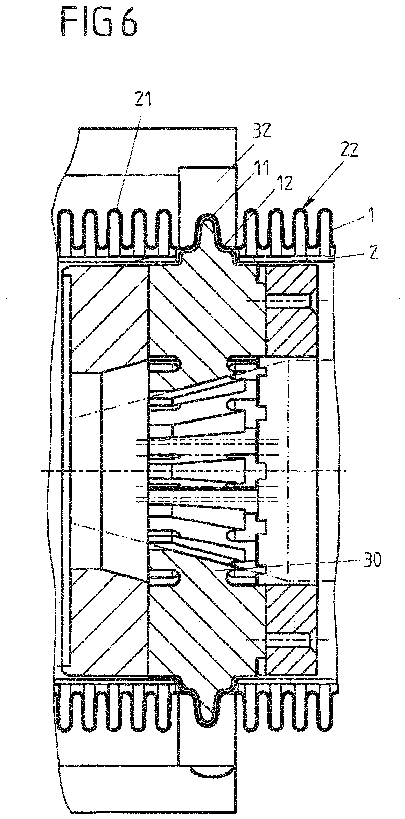

In Fig. 6 ist eine Ausführungsform eines Verformungswerkzeuges 30 dargestellt. Am Umfang des Verformungswerkzeuges 30, das hier als Spreizwerkzeug ausgebildet ist, ist eine Wulst angebracht, die das glatte Innenrohrelement 2 so verformt, dass die Ausformung 12 des Innenrohrelements 1 in die Ausformung 11 des Außenrohrelementes 2 gepresst wird. Eine Matrize 32 ist an der Außenseite des Außenrohrelementes 2 am Umfang der Ausformung 11 angeordnet und bildet beim Verformungsvorgang das Widerlager für das Verformungswerkzeug 30.

Unabhängig davon, ob ein Innenrohrelement 2 mit einem vorgeformten oder einem in-situ verformten Verbindungsmittel 3 verwendet wird, erfordert die Herstellung der mindestens teilweise flächigen Verbindung der Außenseite der Ausformung 12 des mindestens einen Innenrohrelementes 2 mit der Innenseite der Ausformung 11 des Außenrohrelementes 1 (oder eines anderen Innenrohrelementes 2 wie in Fig. 5) in der Regel eine ggf. zusätzliche Aus- oder Einformung, um ggf. einen Hinterschnitt überwinden.

### Bezugszeichenliste

- 1: Außenrohrelement
- 2,2A,2B: Innenrohrelement
- 3: Flanschelement
- 4: Verbindungselement
- 5: Rohrstücke

- 11: Ausformung Außenrohrelement
- 12: Ausformung Innenrohrelement

- 15: Verbindung zwischen Innenrohrelement und Außenrohrelement

- 21: erster Wellabschnitt
- 22: zweiter Wellabschnitt

- 30: Verformungswerkzeug, Spreizwerkzeug
- 31: bewegliches Element am Spreizwerkzeug
- 32: Matrize

- 100: Rohrbauteil; Abgasleitungsbauteil

## Patentansprüche

1. Rohrbauteil mit einem Außenrohrelement und mindestens einem innerhalb des Außenrohrelements angeordneten Innenrohrelement, wobei das Außenrohrelement als flexibles Rohrelement mit mehreren Ausformungen, insbesondere Wellen und / oder mindestens einem Wellabschnitt ausgebildet ist, wobei das Außenrohrelement (1) und das mindestens eine Innenrohrelement (2) an mindestens einer Stelle jeweils eine in radialer Richtung nach außen zeigende Ausformung (11, 12) aufweisen, wobei die Außenseite der Ausformung (12) des mindestens einen Innenrohrelements (2) mindestens teilweise flächig an der Innenseite der Ausformung (11) des Außenrohrelementes (1) oder an der Innenseite der Ausformung (11) eines anderen Innenrohrelementes (1) anliegt, so dass mittels der Ausformungen (11, 12) eine Verbindung (15) zwischen dem mindestens einen Innenrohrelement (2) und dem Außenrohrelement (1) besteht,
**dadurch gekennzeichnet, dass**
die mindestens eine Verbindung (15) als formschlüssige und / oder kraftschlüssige Verbindung (15) ausgebildet ist.

2. Rohrbauteil nach Anspruch 1, **dadurch gekennzeichnet, dass** das mindestens eine Innenrohrelement (2) mindestens zwei Rohrstücke (5) und mindestens ein Verbindungselement (4) zur Verbindung der Rohrstücke (5) aufweist.

3. Rohbauteil nach Anspruch 1 oder 2, **dadurch gekennzeichnet, dass** das mindestens eine Innenrohrelement (2) ein Rohrstück (5), insbesondere ein - abgesehen von der Ausformung (11) - im Wesentlichen glattes Rohrstück (5) aufweist.

4. Rohrbauteil nach mindestens einem der vorhergehenden Ansprüche, **dadurch gekennzeichnet, dass** das mindestens eine Innenrohrelement als flexibles Rohrelement ausgebildet ist.

5. Rohrbauteil nach mindestens einem der vorhergehenden Ansprüche, **dadurch gekennzeichnet, dass** die Ausformungen (11, 12) um das Außenrohrelement (1) und um das mindestens eine Innenrohrbauteil (2) mindestens teilweise umlaufend ausgebildet sind und / oder dass die Ausformungen (11, 12) eine formschlüssige radiale Verbindung durch im Wesentlichen punktuelle Vorsprünge aufweisen.

6. Rohrbauteil nach mindestens einem der vorhergehenden Ansprüche, **dadurch gekennzeichnet, dass** die Wandstärke des Außenrohrelements (1) geringer ist als die Wandstärke des mindestens einen Innenrohrelements (2).

7. Rohrbauteil nach mindestens einem der vorhergehenden Ansprüche, **dadurch gekennzeichnet, dass** das Außenrohrelement (1) und / oder das mindestens eine Innenrohrelement (2) mindestens teilweise einen flexiblen Wellabschnitt (21, 22) aufweisen.

8. Rohrbauteil nach mindestens einem der vorhergehenden Ansprüche, **dadurch gekennzeichnet, dass** das Rohrbauteil als mindestens ein Teil eines Abgasleitungsbauteils (100) ausgebildet ist, wobei insbesondere das Außenrohrelement (1) mindestens zwei Wellabschnitte (21, 22) aufweist und die Verbindung (15) zwischen dem Außenrohrelement (1) und dem mindestens einen Innenrohrelement (2) zwischen, insbesondere mittig zwischen den mindestens zwei Wellabschnitten (21, 22), angeordnet ist.

9. Rohrbauteil nach Anspruch 8, **dadurch gekennzeichnet, dass** an mindestens einem der Enden des mindestens einen Innenrohrelements (2) ein Flanschelement (3) angeordnet ist und / oder dass das Außenrohrelement (1) und das mindestens eine Innenrohrbauteil (2) an den axialen Enden des Abgasleitungsbauteils (100) miteinander verbunden sind, insbesondere verschweißt sind.

10. Rohrbauteil nach mindestens einem der vorhergehenden Ansprüche, **dadurch gekennzeichnet, dass** zwischen dem mindestens einen Innenrohrelement (1) und dem Außenrohrelement (2) oder einem anderen Innenrohrelement (1) ein hülsenförmiger Abstandhalter angeordnet ist.

11. Rohrbauteil nach mindestens einem der vorhergehenden Ansprüche, **gekennzeichnet durch** das mindestens eine Verbindungselement (4) zur Haltung des Abstandes zwischen dem mindestens einen Innenrohrelement (2) und dem Außenrohrelement (1).

12. Verfahren zur Herstellung eines Rohrbauteils nach mindestens einem der Ansprüche 1 bis 11,
**dadurch gekennzeichnet, dass**
a) mindestens ein Innenrohrelement (2) in einem flexiblen Außenrohrelement (1) mit mehreren Ausformungen, insbesondere Wellen und / oder mit mindestens einem Wellabschnitt (21, 22) angeordnet wird,
b) ein Verformungswerkzeug (30) in das mindestens eine Innenrohrelement (2) eingeführt wird,
c) vom Verformungswerkzeug (30) radial nach außen gerichtet eine plastische Verformung des mindestens einen Innenrohrelements (2) und des Außenrohrelements (1) erfolgt, wobei die Verformung so ausgeführt wird, dass
d) die Außenseite einer Ausformung (12) des mindestens einen Innenrohrelements (2) mindestens teilweise flächig an der Innenseite der Ausformung (11) des Außenrohrelementes (1) oder an der Innenseite der Ausformung (11) eines anderen Innenrohrelementes (2) anliegt, so dass mittels der Ausformungen (11, 12) eine Verbindung (15) zwischen dem mindestens einen Innenrohrelement (2) und dem Außenrohrelement (1) hergestellt wird, wobei die mindestens eine Verbindung (15) als formschlüssige und / oder kraftschlüssige Verbindung (15) ausgebildet wird.

13. Verfahren nach Anspruch 12, **dadurch gekennzeichnet, dass** das Verformungswerkzeug (30) radial nach außen bewegbare Elemente (31) mit einer im Wesentlichen bogenförmigen Außenkontur aufweist und / oder dass das Verformungswerkzeug (30) radial nach außen bewegliche Elemente (31) mit einer im Wesentlichen spitz nach außen zeigenden Kontur aufweist und / oder dass das Verformungswerkzeug (30) ein Spreizwerkzeug, ein Hydroformwerkzeug, eine Vorrichtung zum Verformen mit Elastomeren, eine Vorrichtung zum elektromagnetischen Umformen und / oder eine Vorrichtung zum Rollformen aufweist.

14. Verfahren nach Anspruch 12 oder 13, **dadurch gekennzeichnet, dass** bei der Ausbildung der Ausformung (12) an der Außenseite des Außenrohrelementes (1) eine Matrize als Negativform für die Ausformung (12) entgegenhalten wird und / oder dass ein Verbindungselement (4) zur Verbindung von mindestens zwei Rohrstücken (5) des mindestens einen Innenrohrelements (2) bereits mit einer Ausformung vorgeformt ist, wobei dann die Außenseite der Ausformung (12) des mindestens einen Innenrohrelements (2) mindestens teilweise flächig an der Innenseite der Ausformung (11) des Außenrohrelementes (1) oder an der Innenseite der Ausformung (11) eines anderen Innenrohrelementes (2) anliegt, so dass mittels der Ausformungen (11, 12) eine Verbindung zwischen dem mindestens einen Innenrohrelement (2) und dem Außenrohrelement (1) hergestellt wird und / oder
dass vom Verformungswerkzeug (30) radial nach außen gerichtet eine plastische Verformung des mindestens einen Innenrohrelements (2) so erfolgt, dass ein glattes Rohr oder ein Verbindungselement (4) verformt wird.

## Claims

1. A pipe component with an outer pipe element and at least one inner pipe element arranged inside the outer pipe element, wherein the outer pipe element is formed as flexible pipe element with a plurality of projections, in particular corrugations, and/or at least one corrugated portion,
wherein on at least one point the outer pipe element (1) and the at least one inner pipe element (2) each have a projection (11, 12) pointing to the outside in radial direction, wherein the outside of the projection (12) of the at least one inner pipe element (2) at least partly flatly rests against the inside of the projection (11) of the outer pipe element (1) or against the inside of the projection (11) of another inner pipe element (1), so that by means of the projections (11, 12) a connection (15) exists between the at least one inner pipe element (2) and the outer pipe element (1),
**characterized in that**
the at least one connection (15) is formed as positive and/or non-positive connection (15).

2. The pipe component according to claim 1, **characterized in that** the at least one inner pipe element (2) includes at least two pipe sections (5) and at least one connecting element (4) for connecting the pipe sections (5).

3. The pipe component according to claim 1 or 2, **characterized in that** the at least one inner pipe element (2) includes a pipe section (5), in particular a pipe section (5) which substantially is smooth - apart from the projection (11).

4. The pipe component according to at least one of the preceding claims,
**characterized in that** the at least one inner pipe element is formed as flexible pipe element.

5. The pipe component according to at least one of the preceding claims,
**characterized in that** the projections (11, 12) at least partly are circumferentially formed around the outer pipe element (1) and around the at least one inner pipe element (2) and/or the projections (11, 12) have a positive radial connection by substantially punctual protrusions.

6. The pipe component according to at least one of the preceding claims,
**characterized in that** the wall thickness of the outer pipe element (1) is smaller than the wall thickness of the at least one inner pipe element (2).

7. The pipe component according to at least one of the preceding claims,
**characterized in that** the outer pipe element (1) and/or the at least one inner pipe element (2) at least partly have a flexible corrugated portion (21, 22).

8. The pipe component according to at least one of the preceding claims,
**characterized in that** the pipe component is formed as at least one part of an exhaust-gas pipe component (100), wherein in particular the outer pipe element (1) includes at least two corrugated portions (21, 22) and the connection (15) between the outer pipe element (1) and the at least one inner pipe element (2) is arranged between, in particular centrally between the at least two corrugated portions (21, 22).

9. The pipe component according to claim 8, **characterized in that** on at least one of the ends of the at least one inner pipe element (2) a flange element (3) is arranged and/or the outer pipe element (1) and the at least one inner pipe element (2) are connected, in particular welded to each other at the axial ends of the exhaust-gas pipe component (100).

10. The pipe component according to at least one of the preceding claims,
**characterized in that** between the at least one inner pipe element (1) and the outer pipe element (2) or another inner pipe element (1) a sleeve-shaped spacer is arranged.

11. The pipe component according to at least one of the preceding claims,
**characterized by** the at least one connecting element (4) for keeping the distance between the at least one inner pipe element (2) and the outer pipe element (1).

12. A method for manufacturing a pipe component according to at least one of claims 1 to 11,
**characterized in that**
a) at least one inner pipe element (2) is arranged in a flexible outer pipe element (1) with a plurality of projections, in particular corrugations, and/or with at least one corrugated portion (21, 22),
b) a deforming tool (30) is introduced into the at least one inner pipe element (2),
c) directed radially to the outside from the deforming tool (30) a plastic deformation of the at least one inner pipe element (2) and of the outer pipe element (1) is effected, wherein the deformation is carried out such that
d) the outside of a projection (12) of the at least one inner pipe element (2) at least partly flatly rests against the inside of the projection (11) of the outer pipe element (1) or against the inside of the projection (11) of another inner pipe element (2), so that by means of the projections (11, 12) a connection (15) between the at least one inner pipe element (2) and the outer pipe element (1) is produced, wherein the at least one connection (15) is formed as positive and/or non-positive connection (15).

13. The method according to claim 12, **characterized in that** the deforming tool (30) includes elements (31) with a substantially arc-shaped outer contour, which are movable radially to the outside and/or that the deforming tool (30) includes elements (31) with a contour pointing substantially acutely to the outside, which are movable radially to the outside and/or that the deforming tool (30) comprises a spreading tool, a hydroforming tool, a device for deforming with elastomers, a device for electromagnetic shaping and/or a device for roll forming.

14. The method according to claim 12 or 13, **characterized in that** when forming the projection (12) on the outside of the outer pipe element (1), a female die is held against the outside of the outer pipe element (1) as negative mold for the projection (12) and/or a connecting element (4) for connecting at least two pipe sections (5) of the at least one inner pipe element (2) is preformed already with a projection, wherein then the outside of the projection (12) of the at least one inner pipe element (2) at least partly flatly rests against the inside of the projection (11) of the outer pipe element (1) or against the inside of the projection (11) of another inner pipe element (2), so that by means of the projections (11, 12) a connection (15) between the at least one inner pipe element (2) and the outer pipe element (1) is produced, and/or that directed radially to the outside from the deforming tool (30) a plastic deformation of the at least one inner pipe element (2) is effected such that a smooth pipe or a connecting element (4) is deformed.

## Revendications

1. Composant tubulaire avec un élément tubulaire extérieur et au moins un élément tubulaire intérieur disposé à l'intérieur de l'élément tubulaire extérieur, dans lequel l'élément tubulaire extérieur est réalisé en tant qu'élément tubulaire flexible avec plusieurs déformations, en particulier des ondes et/ou au moins une section ondulée, dans lequel l'élément tubulaire extérieur (1) et l'au moins un élément tubulaire intérieur (2) présentent sur au moins un emplacement respectivement une déformation (11, 12) pointant vers l'extérieur dans la direction radiale, dans lequel le côté extérieur de la déformation (12) de l'au moins un élément tubulaire intérieur (2) repose au moins en partie à plat sur le côté intérieur de la déformation (11) de l'élément tubulaire extérieur (1) ou sur le côté intérieur de la déformation (11) d'un autre élément tubulaire intérieur (1) de sorte qu'une liaison (15) entre l'au moins un élément tubulaire intérieur (2) et l'élément tubulaire extérieur (1) existe au moyen des déformations (11, 12),
**caractérisé en ce que**
l'au moins une liaison (15) est réalisée en tant que liaison (15) à complémentarité de forme et/ou à force.

2. Composant tubulaire selon la revendication 1, **caractérisé en ce que** l'au moins un élément tubulaire intérieur (2) présente au moins deux pièces tubulaires (5) et au moins un élément de liaison (4) pour relier les pièces tubulaires (5).

3. Composant tubulaire selon la revendication 1 ou 2, **caractérisé en ce que** l'au moins un élément tubulaire intérieur (2) présente une pièce tubulaire (5), en particulier - abstraction faite de la déformation (11) - une pièce tubulaire (5) sensiblement lisse.

4. Composant tubulaire selon au moins l'une quelconque des revendications précédentes, **caractérisé en ce que** l'au moins un élément tubulaire intérieur est réalisé en tant qu'élément tubulaire flexible.

5. Composant tubulaire selon au moins l'une quelconque des revendications précédentes, **caractérisé en ce que** les déformations (11, 12) sont réalisées au moins en partie de manière périphérique autour de l'élément tubulaire extérieur (1) et autour de l'au moins un élément tubulaire intérieur (2), et/ou que les déformations (11, 12) présentent une liaison radiale à complémentarité de forme par des saillies sensiblement ponctuelles.

6. Composant tubulaire selon au moins l'une quelconque des revendications précédentes, **caractérisé en ce que** l'épaisseur de paroi de l'élément tubulaire extérieur (1) est inférieure à l'épaisseur de paroi de l'au moins un élément tubulaire intérieur (2).

7. Composant tubulaire selon au moins l'une quelconque des revendications précédentes, **caractérisé en ce que** l'élément tubulaire extérieur (1) et/ou l'au moins un élément tubulaire intérieur (2) présentent au moins en partie une section ondulée (21, 22) flexible.

8. Composant tubulaire selon au moins l'une quelconque des revendications précédentes, **caractérisé en ce que** le composant tubulaire est réalisé en tant qu'au moins une partie d'un composant d'acheminement de gaz d'échappement (100), dans lequel en particulier l'élément tubulaire extérieur (1) présente au moins deux sections ondulées (21, 22) et la liaison (15) entre l'élément tubulaire extérieur (1) et l'au moins un élément tubulaire intérieur (2) est disposée entre, en particulier au centre entre les au moins deux sections ondulées (21, 22).

9. Composant tubulaire selon la revendication 8, **caractérisé en ce qu'**un élément de bride (3) est disposé sur au moins une des extrémités de l'au moins un élément tubulaire intérieur (2), et/ou que l'élément tubulaire extérieur (1) et l'au moins un élément tubulaire intérieur (2) sont reliés l'un à l'autre, en particulier sont soudés, sur les extrémités axiales du composant d'acheminement de gaz d'échappement (100).

10. Composant tubulaire selon au moins l'une quelconque des revendications précédentes, **caractérisé en ce qu'**un espaceur en forme de douille est disposé entre l'au moins un élément tubulaire intérieur (1) et l'élément tubulaire extérieur (2) ou un autre élément tubulaire intérieur (1).

11. Composant tubulaire selon au moins l'une quelconque des revendications précédentes, **caractérisé par** l'au moins un élément de liaison (4) pour le maintien de l'espacement entre l'au moins un élément tubulaire intérieur (2) et l'élément tubulaire extérieur (1).

12. Procédé de fabrication d'un composant tubulaire selon au moins l'une quelconque des revendications 1 à 11
**caractérisé en ce que**
a) au moins un élément tubulaire intérieur (2) est disposé dans un élément tubulaire extérieur (1) flexible avec plusieurs déformations, en particulier des ondes et/ou avec au moins une section ondulée (21, 22),
b) un outil de déformation (30) est introduit dans l'au moins un élément tubulaire intérieur (2),
c) une déformation plastique de l'au moins un élément tubulaire intérieur (2) et de l'élément tubulaire extérieur (1) est effectuée par l'outil de déformation (30) de manière dirigée radialement vers l'extérieur, dans lequel la déformation est exécutée de telle sorte que
d) le côté extérieur d'une déformation (12) de l'au moins un élément tubulaire intérieur (2) repose au moins en partie à plat sur le côté intérieur de la déformation (11) de l'élément tubulaire extérieur (1) ou sur le côté intérieur de la déformation (11) d'un autre élément tubulaire intérieur (2) de sorte qu'une liaison (15) entre l'au moins un élément tubulaire intérieur (2) et l'élément tubulaire extérieur (1) est établie au moyen des déformations (11, 12), dans lequel l'au moins une liaison (15) est réalisée en tant que liaison (15) à complémentarité de forme et/ou à force.

13. Procédé selon la revendication 12, **caractérisé en ce que** l'outil de déformation (30) présente des éléments (31) pouvant être déplacés radialement vers l'extérieur avec un contour extérieur sensiblement en forme d'arc, et/ou que l'outil de déformation (30) présente des éléments (31) mobiles radialement vers l'extérieur avec un contour pointant vers l'extérieur sensiblement en pointe, et/ou que l'outil de déformation (30) présente un outil d'écartement, un outil d'hydroformage, un dispositif de déformation avec des élastomères, un dispositif de façonnage électromagnétique et/ou un dispositif de formage par roulage.

14. Procédé selon la revendication 12 ou 13, **caractérisé en ce que** lors de la réalisation de la déformation (12) sur le côté extérieur de l'élément tubulaire extérieur (1), une matrice est opposée en tant que forme négative pour la déformation (12), et/ou qu'un élément de liaison (4) pour relier au moins deux pièces tubulaires (5) de l'au moins un élément tubulaire intérieur (2) est préalablement formé déjà avec une déformation, dans lequel alors le côté extérieur de la déformation (12) de l'au moins un élément tubulaire intérieur (2) repose au moins en partie à plat sur le côté intérieur de la déformation (11) de l'élément tubulaire extérieur (1) ou sur le côté intérieur de la déformation (11) d'un autre élément tubulaire intérieur (2) de telle sorte qu'une liaison entre l'au moins un élément tubulaire intérieur (2) et l'élément tubulaire extérieur (1) est établie au moyen des déformations (11, 12) et/ou qu'une déformation plastique de l'au moins un élément tubulaire intérieur (2) est effectuée par l'outil de déformation (30) de manière dirigée radialement vers l'extérieur de telle sorte qu'un tuyau lisse ou un élément de liaison (4) est déformé.
